Europäisches Patentamt

European Patent Office

Office européen des brevets

(11) Publication number: **0 121 631**
**B1**

## EUROPEAN PATENT SPECIFICATION

(45) Date of publication of patent specification: **10.08.88**

(51) Int. Cl.⁴: **C 02 F 5/10**

(21) Application number: **83307493.3**

(22) Date of filing: **08.12.83**

(54) Method of removing scale.

(30) Priority: **12.04.83 US 484283**

(43) Date of publication of application:
**17.10.84 Bulletin 84/42**

(45) Publication of the grant of the patent:
**10.08.88 Bulletin 88/32**

(84) Designated Contracting States:
**DE FR GB IT**

(56) References cited:
**GB-A-2 054 548**
**GB-A-2 113 254**
**US-A-3 085 916**
**US-A-3 514 376**
**US-A-3 578 589**
**US-A-3 623 991**
**US-A-3 665 035**

(73) Proprietor: **CHEMED CORPORATION**
**1200 DuBois Tower**
**Cincinnati Ohio 45202 (US)**

(72) Inventor: **Baker, Gary Lee**
**1724 Greenup Street**
**Covington Kentuck 41011 (US)**

(74) Representative: **Allen, Oliver John Richard et al**
**Lloyd Wise, Tregear & Co. Norman House**
**105-109 Strand**
**London, WC2R 0AE (GB)**

Courier Press, Leamington Spa, England.

## Description

The present invention relates to a method of removing the alkali earth salts which are commonly referred to as 'scale', from surfaces of water systems such as water heating, cooling or circulating systems. More particularly, the present invention relates to an 'on-line' method of removing scale from the internal surfaces of water systems.

The invention is useful in treating water systems such as boilers, cooling towers, water spray systems such as dishwashers, distribution piping, and water circulating heat exchangers. Such equipment is generically referred to herein as water systems.

Such systems encounter problems with several different types of precipitates which collect in them. One such precipitate is sediment, that is, insoluble particulate material present in the water as admitted to the system and which thereafter settles in the system. Sediment is primarily a problem with water systems which intake river or lake water. Such sediment can be removed by floculants or dispersing agents or by removing it with filters. For example, US—A—3,085,916 discloses the use of water soluble organic polymers to remove and prevent accumulations of sediment such as silt from cooling systems. These floculating agents comprise polyelectrolytic polymers such as those derived from acrylamides, methacrylamides, acrylic acid, methacrylic acid and the like having molecular weights from about 100,000 to well over 2 million. Generally, these floculation agents are used in high concentrations.

A second problem encountered with water systems is known as 'tubercles', which are formations of rust. US—A—3,658,710 discloses a method of removing tubercles of corrosion using an aqueous solution including an organic polymer and a water soluble silica-containing compound and/or a water soluble chromium-containing compound. The organic polymer is similar to that disclosed in US—A—3085916. US—A—3658710 suggests the addition of a lower molecular weight polyacrylate or organic phosphonate in low concentrations to inhibit scale from depositing.

A third problem with water systems is scale. Scale is basically salts of alkaline earth metals, which form in the system and adhere to internal surfaces of the system. Examples of scale include the silicates, sulphates, phosphates and carbonates of alkaline earth metals such as calcium, magnesium and barium. Scale generally occurs in water systems using hard water. It can severely reduce the efficiency of these systems. Since it coats heat exchange surfaces, it thereby acts as an insulating mass and reduces heat transfer to or from the water. Scale also reduces the flow rate of the water in the system and/or necessitates higher pressures to maintain a desired flow rate.

In general, there are two methods of handling scale problems. The first is to prevent the scale from depositing. A common method of preventing or 'inhibiting' scale is to add a low concentration of a salt of polyacrylic or polymethacrylic acid. Generally these compounds are admitted together with a second active agent such as a phosphonic acid, phosphorous acid, lignose sulphonic acid, or a phosphate. These methods are disclosed, for example in US Patent Nos. 3,514,376; 3,766,077; 3,890,228; 4,163,733; 4,168,230; and 4,277,359.

A method of inhibiting scale formation using a descalant which is a mixture of acrylic or methacrylic acid polymers or salts thereof and a non-ionic surface agent is disclosed in US Patent 3578589. The concentrations of the prepared mixtures vary from 0.2 to 100 parts by weight of the mixture per million parts water. Trials of these descalent mixtures show that the scaling rate of an arsenical admiralty brass pipe is reduced by about 34% if sodium polymethacrylate alone at a concentration of 0.6 ppm is added to the water circulating through the pipe. In the same test a mixture of a non-ionic surface agent at 10 ppm and sodium polymethacrylate to 0.6 ppm can reduce the scaling rate by approximately 50%.

The very low concentrations of the acrylic or methacrylic acid polymers disclosed in US 3578589 and indeed the other aforementioned Patents means that such compositions are only suitable for inhibition of scale formation and would have little effect on scale already formed on a surface within a water system. However for scale inhibition, it is generally preferred to maintain the concentration of the salt of the polyacrylic or polymethacrylic acid at less than about 15 parts per million because at higher concentrations, i.e., above about 30 parts per million, the polyacrylates or polymethacrylates tend to precipitate out of solution after they become associated with the alkali metal cations, i.e., $Ca^{++}$, $Mg^{++}$ and $Ba^{++}$, from the dissolved scale. That is, an excess amount of the scale inhibitor itself causes a precipitate.

This belief that polyacrylates precipitate out of solution at higher concentrations is evidenced by Bulletin CS-513 dated December 1981, published by Rohm and Haas, a major manufacturer of polyacrylic acid and neutralised polyacrylic acid. The Bulletin indicates that at 40°C and 100 parts per million calcium, as calcium carbonate, turbidity occurs with Acrysol LMW-45X, a polyacrylate having molecular weight of 4500.

The second method of treating a scale problem is to remove the scale after it has deposited. Scale removal can be effected in two ways, either off-line or on-line. In the off-line procedure, the system is closed down (circulation is stopped) and the internal scale-bearing surfaces of the system are subjected to a strong acid such as inhibited hydrochloric acid. Such treatment removes the scale by dissolving it, and flushing it from the system. However, some of the scale can be removed as chunks which can clog or otherwise foul the system. The system shutdown in any off-line treatment adds to cost. Further, since strong acids are used, there is a danger of damaging metal surfaces.

On-line boiler scale removal is a better technique than off-line scale removal in that it does not require

# 0 121 631

equipment shutdown. Unfortunately, there has not heretofore been an effective low-cost, on-line method for removing scale from heat exchange surfaces. Chelators, such as ethylene diaminetetracetic acid (EDTA), amino-tri (methylenephosphonic acid) (ATMP) and 1-hydroxyethylidene-1 1-diphosphonic acid (HEDP), may be used on-line to remove scale, but are costly and relatively ineffective.

German Patent No. 3,022,924 discloses the use of polyitaconic acid to remove scale. Examples are provided on its effectiveness both alone and in combination with unsaturated monomers including polyacrylic acid and polymethacrylic acid.

Both itaconic acid homopolymer of molecular weight 4,500 and sodium polyacrylate of molecular weight 4,500 are individually tested at concentrations below 100 ppm for their ability to remove scale from the heating element of an autoclave which is operated for two days with tap water containing the individual descalants. Since no alkali is added to the water during the test, it must be assumed that acid conditions prevail within the autoclave since the itaconic acid and sodium acrylate as prepared or when purchased would be acidic. The results of the test indicate that the itaconic acid homopolymer successfully removes 99.9% of the scale on the heating element while the performance of the sodium polyacrylate is relatively poor, only removing 75.2% of the scale.

This is therefore a further indication that polyacrylates have not heretofore been known to be useful as scale removers.

In accordance with one aspect of the invention a method of removing adherent scale from surfaces within water systems, comprises adding to the water in the system an amount of descalant compound comprising a water soluble salt of polyacrylic acid or polymethacrylic acid and passing the water and descalant through the system for a period of time effective to remove at least part of the scale, characterised in that the concentration of the descalant is at least 125 parts by weight descalant compound per million parts water and effective to dissolve the scale and yet maintain the descalant compound dissolved, and in that the pH of the descalant compound is at least 7.

In accordance with another aspect of the invention, a method of removing adherent scale from surfaces within water systems comprises adding to the water in the system a descalant compound and passing the water and descalant through the system for a period of time effective to remove at least part of the scale characterised in that the descalant comprises a solution which is formed from at least partially neutralised polyacrylic acid or polymethacrylic acid having a pH of at least 7 and in that the concentration of the descalant compound is at least 125 parts by weight descalant per million parts water.

The present invention is premised upon the discovery that even though polyacrylates and polymethacrylates associate with cations from scale deposits and then themselves precipitate out of solution at concentrations around 30 ppm, at substantially higher concentrations, these polyacrylates and polymethacrylates dissolve scale yet will substantially remain in solution and will thereby remain effective to dissolve further scale. Under certain concentration conditions, a polymer selected from the group consisting essentially of water soluble salts of polyacrylic acid and water soluble salts of polymethacrylic acid can be circulated through a water heating, cooling or circulation system to dissolve and remove the scale. The effective concentration of polymers of this type is above about 125 parts polymer per million parts water and further is such that the polymer dissolves the scale but does not itself precipitate out of solution. More particularly, where the polymer molecular weight is in the range from about 500 to about 100,000, the concentration should be from about 125 to about 1,000 ppm based on the water in the circulation system. The scale remover can be used by itself, that is, it need not be mixed with the additives normally used with acrylate base scale inhibitors.

The present invention provides an on-line method of water treatment requiring no system shutdown or lost time. Further, the invention functions efficiently under alkaline conditions and does not present a corrosive environment, unlike conventional acid treatments. Further, the present invention does not react with the scale to liberate gases or generate carbon dioxide, unlike treatment with strong acids. Therefore, pressure locks and void spaces are avoided in heat exchange condensers, and the cavitation of circulating pumps is also avoided. Since venting of a system is not required to release pressure due to $CO_2$ production, the invention can be used to descale closed systems. Finally, the present invention is compatible with the desirable oxidizing microbiocides that are often present in such systems. These and other advantages will become apparent from the detailed description of the invention.

The invention will now be described, by way of example, with reference to the accompanying drawings, in which:—

Figure 1 is a graphic depiction of scale removal using various scale removers according to the method of the present invention.

Figure 2 is a graphic depiction of scale removal effected by various concentrations of sodium polyacrylate over 1 hour.

Figure 3 is a graphic depiction of scale removal effected by sodium polyacrylate at various alkaline pH's.

An effective amount of a descalant or scale removing compound is added to the water within the water system and the water-descalant solution is repeatedly circulated through the system in on-line system operation. The descalant will dissolve the scale and will itself remain in solution. The dissolved scale and descalant can be gradually removed from the system during periodic bleed off.

The descalant for use in the present invention is a soluble alkali, i.e., ammonium or alkali metal, salt of

3

polyacrylic or polymethacrylic acid, such as sodium polyacrylate, potassium polyacrylate, sodium polymethacrylate, potassium polymethacrylate, ammonium polyacrylate and ammonium polymethacrylate. The ammonium salts should not be used in a water circulation system wherein any of the internal surfaces of the water circulation system are copper or a copper alloy since amines act very severely on copper and its alloys. The preferred descalant is sodium polyacrylate.

The descalant can be used without additional substances typically used in combination with polyelectrolytic polymers in water systems, such as non-ionic surface active agents and phosphorous compounds such as phosphonic acid and phosphates. The descalant composition preferably consists of either the salt of polyacrylic acid or the salt of polymethacrylic acid or mixtures of these two, without such additives.

In practicing the method of the present invention, the molecular weight of the descalant is important. The descalant composition should have a molecular weight in the range of about 500 to about 100,00. Higher molecular weight descalants are less effective because at higher concentrations they precipitate out of solution after dissolving scale. Further, the physical size of such high molecular weight polymers itself inhibits scale removal. At lower molecular weights, descaling activity also tends to decrease. Preferably the molecular weight of the descalant is less than about 85,000. The preferred molecular weight range is from about 1,000 to about 10,000 and most particularly, about 4,500.

The materials used in the present invention are produced according to known methods and are themselves commercially available. For example, European Patent Application 0014083 entitled "Low Molecular Weight Water Soluble Polymers, Their Preparation and Their Use in Scale Inhibition" discloses a method of making low molecular weight water soluble polyacrylic acids and polymethacrylic acids. These lower molecular weight polyacids are then at least partially neutralized with a base such as sodium hydroxide, ammonium hydroxide, potassium hydroxide or the like, preferably using excess base. At a pH of 7, the polyacrylic acid (4500 mw) is about 90% neutralized. At a pH of 9, the polyacrylic acid is totally neutralized. The polyacids which are at least partially neutralized and at a pH of at least 7 are the descalant compositions used in the present invention.

The polyacids and their neutralized salts are commercially available. Rohm and Haas markets a line of low molecular weight acrylic acids and neutralized acrylic acids under the trademark Acrysol. One preferred unneutralized material of this type is Acrysol LMW-45X. Acrysol LMW-45NX is a suitable neutralized material. In both products, the molecular weight of the polymer is about 4,500.

The descalant concentration at which the method of the present invention is effective for removing scale is critical. Although the polyacrylates and polymethacrylates are scale inhibitors at low concentrations, it is known that once the concentration exceeds about 30 parts per million, the polyacrylates and polymethacrylates will also precipitate out of solution as they associate with scale cations. The precipitated polymer can then foul the system, and in any event, it renders the polymer unavailable for further inhibition.

Surprisingly, however, it has now been found that at higher concentrations, at about 125 or more parts of polyacrylate or polymethacrylate (as acid solids) per million parts of water (ppm), the polyacrylates and polymethacrylates both dissolve scale and themselves remain in solution. Accordingly, the lower concentration limit for use in the present invention is at least about 125 ppm.

An upper concentration limit becomes significant with descalants having molecular weights above about 85,000. At these higher molecular weights, and at high concentrations, the descalants again tend to precipitate out of solution after dissolving part of the scale. It has been found that the concentration should be maintained at less than about 1,000 ppm for acrylates having a molecular weight above 85,000. When the molecular weight of the descalant is less than about 10,000, substantially higher concentrations can be used.

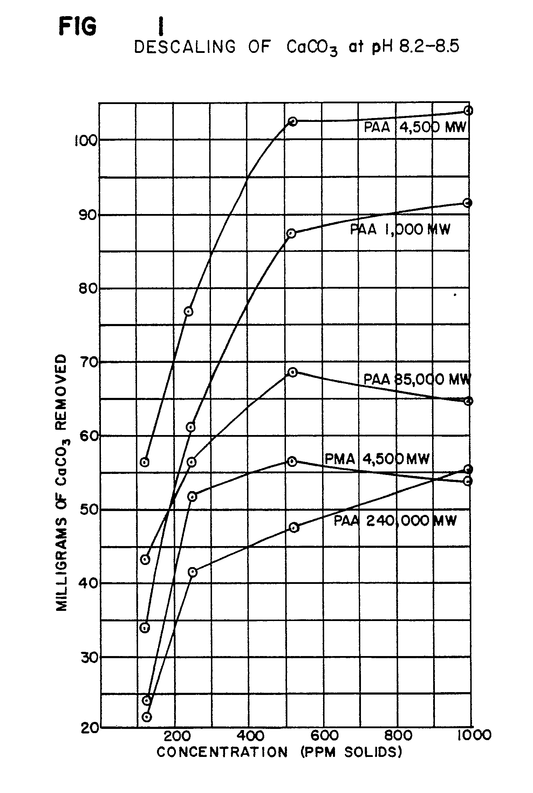

The effect of concentration and molecular weight is graphically depicted in Figure 1, which shows milligrams of $CaCO_3$ scale removed by polymethacrylate (PMA) and several polyacrylates (PAA) of different molecular weights, as a function of concentration. The pH was held constant at 8.2—8.5 and the concentration was varied. The data shown on this graph demonstrates the ineffectiveness below about 125 ppm and the substantially greater effectiveness above about 200 ppm. It also demonstrates that higher molecular weight (above about 85,000) polyacrylate is less effective than lower molecular weight polymers. Further, the more efficient descaling occurs using polyacrylate having a molecular weight from about 1,000 to about 85,000. The most efficient descaling occurred using polyacrylate having a molecular weight of about 4,500.

With respect to concentration, the descaling effectiveness generally peaked or leveled off at about 500—550 ppm. Precipitation occurred using 1,000 ppm polyacrylate having a molecular weight of 85,000 and using about 250 ppm of polyacrylate having a molecular weight of 240,000 ppm. It is also seen that the polyacrylate is a substantially better descalant than the polymethacrylate.

With respect to the efficiency, scale removal begins to become effective at about 125 ppm active polymer, but reaches its peak economic efficiency at about 500 to 550 ppm, preferably about 540 ppm.

Alkalinity or pH of the system is important to prevent damage to the surface of the water system. Although the present method does not require tightly controlled pH conditions, efficient descaling occurs in a pH range of from about 7 to about 11. In other words, the solution of the descalant in water passing through the water system should have a pH from about 7 to about 11.

The most effective descaling occurs with 100% neutralised polyacrylate which has little if any excess hydroxyl groups present. When the descalant is sodium polyacrylate having a molecular weight of 4500, the activity of the descalant increases as the pH increases from 7 to about 9. At a pH of 9, 100% of this descalant is neutralised. As the pH is increased to 10 and to 11, the activity slowly drops off. At pH's higher than 11, the activity drops off drastically. Apparently 100% neutralised polyacrylate or polymethacrylate is the most effective. Excess free hydroxyl groups present at higher pH's seem to interfere with the scale removal. Of course, the present invention is merely concerned with removal of scale at pH's above 7. At pH's above 7, the scale removal is primarily effected by coordination bond formation between the polymer and the alkali earth metal portion of the scale. At pH's below 7, the acid functionality of the polymer predominates. The scale removal is more a result of the acid functionality attacking the anionic portion of the scale than the coordination bonding of the polymer to the alkali earth metal.

The rate of descaling activity will be effected by the temperature of the descalant water mixture. The temperature can be as high as the thermal stability of the polymer permits, which will, of course, vary with the specific polymer used. Descaling activity will occur at room temperature, i.e., about 21°C; but enhanced descaling occurs at 38°C to 43°C, and a substantial increase occurs at about 90°C to 93°C.

The time required to remove scale will vary depending upon the particular scale, the amount of build-up and concentration level of the descalant. Many scales can be removed by circulating the descalant-water mixture through the water system for periods as short as 48 hours. Repeated treatment may be required to remove extremely severe scale deposits.

The water, together with the descalant and dissolved scale, is bled or flushed from the system after the treatment has been carried out. Typically, in operating a recirculating water system, a portion of the water is bled off periodically and replaced. This periodic bleed off will act gradually to remove the descalant and the dissolved scale from the recirculation system.

Laboratory examples

To demonstrate the operation of the present invention and its preferred embodiment, the following laboratory examples are presented. These laboratory examples were all conducted utilising pre-weighed borosilicate glassware onto which calcium carbonate scale was intentionally deposited. Scale deposition was achieved by introducing the glassware into an institutional dishwashing machine at 71°C for approximately six hours. Sodium carbonate was added to the make-up water in the wash tank to promote scaling of the naturally hard water. The scaled borosilicate glass was rinsed in deionised water and dried to a constant weight. The amount of scale was recorded.

Descaling was performed in a four litre beaker while applying mild agitation to a descaling solution. A one hour test period was used for descaling at a temperature of 38°C to 43°C at a pH of 8.2—8.5. The glassware samples were then rinsed in deionised water and dried to a constant weight. The amount of scale removal was then determined. Table 1 shows the descaling results obtained in testing sodium hydroxide-neutralised polyacrylic acids (PAA) of various molecular weights, sodium hydroxide neutralised-polymethacrylic acid (PMA), prior art chelating agents HEPD and ATMP (for comparison), a combination of phosphonate and polyacrylate and a polyacrylate-polymethacrylate combination. Some of the Table results are illustrated graphically in Figure 1. As can be seen, the use of sodium polyacrylate having a molecular weight of about 4500, at a concentration of 540 ppm, gives best results and is the preferred method.

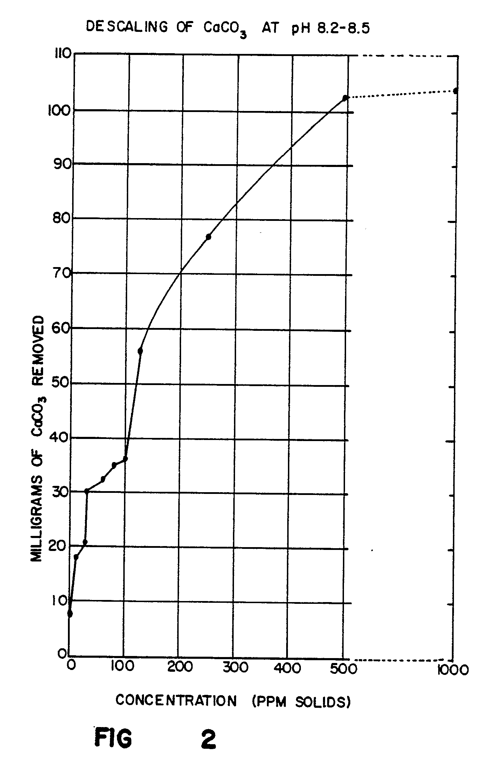

Figure 2 further elaborates the effect of concentration on the descaling activity. The solid line is a data line indicating the effective removal of calcium carbonate obtained in one hour using the indicated concentration of sodium polyacrylate having a molecular weight of 4500 at a pH of 8.2—8.5 and a temperature of 38—43°C. As indicated in the graph, only a small amount of scale is removed when the polymer concentration is at 30 ppm or less. However, at these low levels, no precipitation occurs. At concentrations from 30 to about 100 ppm, precipitation occurs and there is relatively little increase in effectiveness. However, at concentrations above 100 parts per million, precipitation no longer occurs. Further, the descaling activity increases at an extremely high rate from 100 to 125 ppm. The polymer at these concentrations sequesters calcium cations, yet remains soluble. The increase in descaling activity continues until the polymer reaches about 540 parts per million. At this point, the system appears to be saturated, and the scale removing effectiveness levels off.

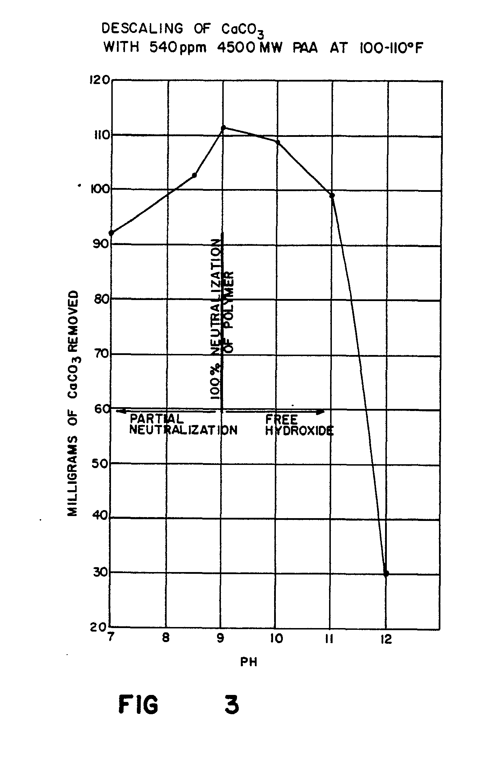

Further tests were conducted to ascertain the effective of pH on descaling activity. The results of these tests are graphically depicted in Figure 3. As with previous tests, the descalant was 4500 molecular weight sodium polyacrylate used at a concentration of 540 ppm at a temperature of 100 to 110°F. The tests were conducted for one hour. At a pH of 7, adequate scale removal was demonstrated. Scale removal activity improved as the pH approached 9. According to the manufacturer of the sodium polyacrylate used, the polymer is 100% neutralized, i.e., 100% sodium polyacrylate at a pH of 9. This was also the most effective pH for descaling. If the pH increased above 9, the effectiveness dropped off. However, the polyacrylate was relatively effective up to a pH of about 11. As the pH increased beyond 11, the scale removing activity decreased extremely rapidly until at a pH of 12, little scale removal was demonstrated. It is believed that the reason for this decrease as the pH goes beyond 11 is that the free hydroxy groups present in the solution tend to shift the equilibrium, thereby forcing or causing the sodium in the sodium polyacrylate to remain bound to the polymer. Therefore, there are no free sites on the polymer to sequester calcium.

Further tests also indicated the negative effect of the use of chelators in combination with the polyacrylates. The results shown in Table 1 indicate that a descaling composition formed from a 50/50 mixture of ATMP and polyacrylate 4500 molecular weight is substantially less effective than sodium polyacrylate by itself. Further, as reported in Table 1, sodium polyacrylate is substantially more effective than ATMP or HEDP alone.

TABLE 1
CaCO$_3$ Scale removal in milligrams, in 1 hour

| Descalant concentration | PAA 1,000 MW | PAA 4,500 MW | PAA 85,000 MW | PAA 240,000 MW | PMA 4,500 MW | ATMP | HEDP | $\dfrac{\text{ATMP}}{\text{PAA 4,500}}$ | $\dfrac{\text{PAA 4,500}}{\text{PMA 4,500}}$ |
|---|---|---|---|---|---|---|---|---|---|
| 125 ppm | 34.1 | 56.3 | 43.2 | 20.2 | 24.0 | 28.6 | 18.4 | 22.2 | 42.3 |
| 250 ppm | 61.0 | 77.0 | 56.5 | 41.4 | 51.9 | 24.5 | 62.2 | 42.2 | 48.3 |
| 540 ppm | 85.7 | 102.6 | 68.5 | 47.7 | 56.5 | 27.8 | 68.7 | 49.9 | 63.0 |
| 1,000 ppm | 91.4 | 104.4 | 64.7 | 55.1 | 53.8 | 70.9 | 66.5 | 77.8 | 87.5 |

Further tests were conducted again using borosilicate glass with scale deposited thereon. These tests used the sodium hydroxide neutralised polyacrylic acid Acrysol LMW-45X sold by Rohm and Haas. In the first test, the pH was 8.2—8.5, and the second test, the pH was 12.0—12.2. In both tests, the temperature was maintained at a constant. A third test was conducted at a pH of 8.2—8.5 and at a temperature of 90°C to 93°C. All tests were conducted for an hour with mild agitation in a four litre beaker. The results of these tests are shown in Table 2.

TABLE 2
Effect of temperature and pH variation on descaling with
540 ppm LMW-45X for 1 hour

| Temperature Removed | pH | mg. of $CaCO_3$ |
| --- | --- | --- |
| 38—43°C | 8.2—8.5 | 102.6 |
| 38—43°C | 12.0—12.2 | 30.6 |
| 90—93°C | 8.2—8.5 | 137.8 |
| 90—93°C | 12.0—12.2 | 64.3 |

Field tests

In addition to laboratory tests, several field tests were conducted using sodium hydroxide neutralised Acrysol LMW-45X sold by Rohm and Haas, and having a molecular weight of 4,500. In evaluating field tests, there are various indications of effectiveness. In a cooling tower, an increase in temperature change from the in-flowing water to the out-flowing water indicates scale removal. This is because scale acts as an insulator and thereby retards heat transfer. In addition, a decrease in pressure drop from the inlet to the outlet is a further indication of scale removal. This is because scale restricts water flow. Scale removal can also be determined by actual inspection, where possible.

Field test 1

A 200 ton induced draft tower was severely scaled by more than six years of non-treatment. Physical cleaning off-line had failed earlier. The system was charged with a 0.25% concentration (540 ppm) of the descalant, and bleed off was discontinued. After 36 hours of circulating the descalant mixture through the tower, a noticeable improvement in water flow was evident, which indicated that there had been substantial scale removal.

Field test 2

A severely scaled air conditioning cooling tower system was descaled using 540 ppm of descalant. This removed approximately 90% of the scale in three days.

Field test 3

A 400 ton Marley tower was treated. The tower itself was not scaled, but it was suspected that scaling had occurred in the condenser tubes because vacuum pressure had been dropping. The system was descaled with 540 ppm of the descaling composition for three days. The head was then pulled and tubes were inspected. The tubes were found to be shiny clean.

Field test 4

An evaporative condenser system was treated with 540 ppm of the descaling composition. This removed approximately 85% of the scale from the tower tubes and opened plugged spray nozzles after two days of treatment.

Field test 5

A 1,250 ton tower was treated. An analysis of the system water indicated total hardness of 1,080 ppm, chlorides of 1,210 ppm, and total dissolved solids of 5,750 ppm. Prior to descaling the condenser, the temperature of in-flowing water was approximately 25°C and the temperature of out-flowing water was about 28°C, i.e., a 3°C differential. The pressure at the water inlet was approximately 262 kPa and the pressure at the outlet has 172 kPa, a pressure of 90 kPa. The condenser was treated for 48 hours with 540 ppm of descalant. Afterwards, the change in temperature from the incoming to the outgoing water was 6°C and the pressure drop was only 14 kPa.

As demonstrated in the previous laboratory tests and field tests, salts of polyacrylic acid and polymethacrylic acid are effective descalants at concentrations above about 125 ppm descalant. It is particularly notable that the lower molecular weight polyacrylates are extremely efficient descalants, particularly in the range of molecular weights from about 1,000 to about 85,000. Optimally, the molecular weight should be about 4,500. Finally, peak descaling efficiency is obtained in the concentration range of 500 to 1,000 ppm with the most cost efficient concentration being about 540 ppm.

## Claims

1. A method of removing adherent scale from surfaces within water systems, comprising adding to the water in the system an amount of descalant compound comprising a water soluble salt of polyacrylic acid or polymethacrylic acid and passing the water and descalant through the system for a period of time effective to remove at least part of the scale, characterised in that the concentration of the descalant is at least 125 parts by weight descalant compound per million parts water and effective to dissolve the scale and yet maintain the descalant compound dissolved in water after the scale has been dissolved, and in that the pH of the descalant compound is at least 7.

2. A method of removing adherent scale from surfaces within water systems comprising adding to the water in the system a descalant compound and passing the water and descalant through the system for a period of time effective to remove at least part of the scale characterised in that the descalant comprises a solution which is formed from at least partially neutralised polyacrylic acid or polymethacrylic acid having a pH of at least 7 and in that the concentration of the descalant compound is at least 125 parts by weight descalant per million parts water.

3. A method as claimed in either claim 1 or 2 characterised in that the concentration of the descalant in the water is in the range from 125 ppm to about 1,000 ppm, and in that the descalant compound has a molecular weight in the range from about 500 to about 100,000.

4. A method as claimed in any preceding claim characterised in that the descalant compound has a molecular weight in the range from about 1,000 to about 85,000.

5. A method as claimed in any preceding claim characterised in that the descalant compound has a molecular weight in the range from about 1,000 to about 10,000.

6. A method as claimed in any preceding claim characterised in that the descalant compound has a molecular weight of about 4,500.

7. A method as claimed in any preceding claim characterised in that the concentration of the descalant in the water is in the range from about 500 ppm to about 550 ppm.

8. A method as claimed in any preceding claim characterised in that the concentration of the descalant is at least about 500 parts per million, and in that the pH is greater than about 8.5.

9. A method as claimed in any preceding claim characterised in that either the solution comprises 100% neutralised polyacrylic acid or the descalant compound is a salt of polyacrylic acid.

10. A method as claimed in any preceding claim characterised in that the descalant compound consists essentially of sodium polyacrylate, wherein the sodium polyacrylate is circulated in the system for a period of at least about 48 hours and sufficient that scale deposits in the system are at least partially dissolved, and wherein the water, polyacrylate and dissolved scale is thereafter removed from the system.

## Patentansprüche

1. Verfahren zur Entfernung von an Oberflächen innerhalb von Wassersystemen haftenden Kesselstein, wobei man zum Systemwasser eine Menge Entkalkungsverbindung aus einem wasserlöslichen Salz von Polyacryl- oder Polymethacrylsäure gibt und das Wasser mit dem Entkalkungsmittel durch das System für eine zur Entfernung zumindest eines Teils des Kesselsteins genügend lange Zeitdauer leitet, dadurch gekennzeichnet, daß die Konzentration des Entkalkungsmittels mindestens 125 Gewichtsteile Entkalkungsmittel pro Million Teile Wasser und zur Auflösung des Kesselsteins wirksam ist, jedoch das Entkalkungsmittel im Wasser gelöst bleibt, nachdem der Kesselstein gelöst wurde, und daß der pH der Entkalkungsverbindung wenigstens 7 beträgt.

2. Verfahren zur Entfernung von an Oberflächen innerhalb von Wassersystemen haftenden Kesselstein, wobie man zum Systemwasser eine Menge Entkalkungsverbindung gibt und das Wasser mit dem Entkalkungsmittel durch das System für eine zur Entfernung zumindest eines Teils des Kesselsteins genügend lange Zeitdauer leitet, dadurch gekennzeichnet, daß das Entkalkungsmittel aus einer Lösung besteht, die aus zumindest teilweise neutralisierter Polyacryl- oder Polymethacrylsäure mit einem pH von wenigstens 7 besteht, und daß die Konzentration des Entkalkungsmittels mindestens 125 Gewichtsteile Entkalkungsmittel pro Million Teile Wasser ist.

3. Verfahren nach einem der Ansprüche 1 oder 2, dadurch gekennzeichnet, daß der Konzentrationsbereich des Entkalkungsmittels im Wasser zwischen 125 ppm und etwa 1.000 ppm und daß der Molekulargewichtsbereich der Entkalkungsverbindung zwischen etwa 500 und etwa 100.000 liegt.

4. Verfahren nach einem der vorherigen Ansprüche, dadurch gekennzeichnet, daß der Molekulargewichtsbreich der Entkalkungsverbindungs zwischen etwa 1.000 und etwa 85.000 liegt.

5. Verfahren nach einem der vorherigen Ansprüche, dadurch gekennzeichnet, daß der Molekulargewichtsbereich der Entkalkungsverbindung zwischen etwa 1.000 und etwa 10.000 liegt.

6. Verfahren nach einem der vorherigen Ansprüche, dadurch gekennzeichnet, daß das Molekulargewicht der Entkalkungsverbindung etwa 4.500 beträgt.

# 0 121 631

7. Verfahren nach einem der vorherigen Ansprüche, dadurch gekennzeichnet, daß der Konzentrationsbereich des Entkalkungsmittels in Wasser zwischen etwa 500 ppm und etwa 550 ppm liegt.

8. Verfahren nach einem der vorherigen Ansprüche, dadurch gekennzeichnet, daß die Konzentration des Entkalkungsmittels mindestens etwa 500 Teile pro Million beträgt und daß der pH höher als etwa 8.5 ist.

9. Verfahren nach einem der vorherigen Ansprüche, dadurch gekennzeichnet, daß die Lösung entweder aus 100% neutralisierter Polyacrylsäure besteht oder die Entkalkungsverbindung ein Salz der Polyacrylsäure ist.

10. Verfahren nach einem der vorherigen Ansprüche, dadurch gekennzeichnet, daß die Entkalkungsverbindung im wesentlichen aus Natriumpolyacrylat besteht, wobei dieses für eine Dauer von wenigstens etwa 48 Stunden im System zirkuliert und ausreicht, um die Kesselsteinablagerungen im System wenigstens teilweise aufzulösen, und wobei das Wasser, das Polyacrylat und der aufgelöste Kesselstein danach aus dem System entfernt werden.

## Revendications

1. Un procédé pour retirer la tartre qui adhère aux surfaces internes des réseaux de canalisations d'eau, comprenant l'addition à l'eau dans le réseau d'une quantité de composants détartrants comprenant un sel hydrosoluble d'acide polyacrylique ou d'acide polyméthacrylique et le passage de l'eau et du détartrant à travers le réseau pendant une période de temps efficace pour retirer au moins une partie du tartre, caractérisé en ce que la concentration du détartrant est d'au moins 125 parties en poids de composé détartrant par million de parties d'eau, et efficace pour dissoudre le tartre, tout en maintenant le composé détartrant dissous dans l'eau après que pe tartre ait été dissous, et en ce que le pH du composé détartrant est au moins égal à 7.

2. Un procédé pour retirer le tartre qui adhère aux surfaces internes des réseaux de canalisations d'eau comprenant l'addition à l'eau dans le réseau d'un composé détartrant et le passage de l'eau et du détartrant à travers le réseau pendant une période de temps efficace pour retirer au moins une partie du tartre, et qui est caractérisé en ce que le détartrant comprend une solution qui est formée à partir d'acide polyacrylique ou d'acide polyméthacrylique partiellement neutralisé, ayant un pH d'au moins 7 et en ce que la concentration du composé détartrant est d'au moins 125 parties en poids de détartrant par million de parties d'eau.

3. Un procédé selon l'une ou l'autre des revendications 1 ou 2 caractérisé en cs que la concentration du détartrant dans l'eau est comprise dans l'intervalle de 125 ppm à environ 1.000 ppm, et en ce que le composé détartrant a un poids moléculaire compris dans l'intervalle d'environ 500 à environ 100.000.

4. Un procédé selon l'une quelconque des revendications précédentes caractérisé en ce que le composé détartrant a un poids moléculaire compris dans l'intervalle d'environ 1.000 à environ 85.000.

5. Un procédé selon l'une quelconque des revendications précédentes caractérisé en ce que le composé détartrant a un poids moléculaire compris dans l'intervalle d'environ 1.000 à environ 10.000.

6. Un procédé selon l'une quelconque des revendications précédentes caractérisé en ce que le composé détratrant a une poids moléculaire d'environ 4.500.

7. Un procédé selon l'une quelconque des revendications précédentes caractérisé en ce que le concentration du détartrant dans l'eau est comprise dans l'intervalle d'environ 500 ppm à environ 550 ppm.

8. Un procédé selon l'une quelconque des revendications précédentes caractérisé en ce que la concentration du détartrant est d'au moins environ 500 parties par million, et en ce que le pH est supérieur à environ 8,5.

9. Un procédé selon l'une quelconque des revendications précédentes caractérisé en ce que soit la solution comprend de l'acide polyacrylique neutralisé à 100%, soit le composé détartrant est un sel d'acide polyacrylique.

10. Un procédé selon l'une quelconque des revendications précédentes caractérisé en ce que le composé détartrant est constitué essentiellement de polyacrylate de sodium, dans lequel on fait circuler le polyacrylate de sodium dans le réseau pendant une période d'au moins environ 48 heures et suffisant pour que les dépôts de tartre dans le réseau soient au moins partiellement dissous, et dans lequel l'eau, le polyacrylate et le tartre dissous sont ultérieurement retirés du réseau.

FIG 1

DESCALING OF $CaCO_3$ at pH 8.2–8.5

DESCALING OF $CaCO_3$ AT pH 8.2-8.5

FIG 2

DESCALING OF CaCO₃
WITH 540 ppm 4500 MW PAA AT 100-110°F

FIG 3